# EUROPEAN PATENT SPECIFICATION

(11) **EP 4 018 269 B1**
(45) Date of publication and mention of the grant of the patent: **07.12.2022**
(21) Application number: 20729699.7
(22) Date of filing: 28.05.2020
(51) Int. Cl.: G04C 3/14, H02K 3/52, H02K 7/116

(54) **ANALOGUE DISPLAY MODULE FOR WATCHES**
ANALOGES ANZEIGEMODUL FÜR UHREN
MODULE D'AFFICHAGE ANALOGIQUE POUR MONTRES

(43) Date of publication of application: 29.06.2022
(73) Proprietor: Soprod SA, 1950 Sion (CH)
(72) Inventor: PIQUEREZ, Denis, 1920 Martigny (CH); CLIVAZ, Romain, 3979 Grône (CH)
(74) Representative: Herrero & Asociados, S.L.
(86) International application number: PCT/EP2020/064849
(87) International publication number: WO 2021/239229

(56) References cited:
- EP-A1- 3 185 084
- EP-A1- 3 330 811
- WO-A1-2010/098883
- WO-A1-2019/043643
- US-A1- 2008 075 446
- US-A1- 2017 192 393

## Description

### Object of the invention

The present invention falls within the technical field of the apparatuses or tools specially designed for making or maintaining clocks or watches, namely on the supporting means facilitating assembly and mechanisation, as well as in the field of the mechanical parts of clocks or watches, and it relates in particular to an analogue display module for watches, used to drive two separate hands in an independent and bi-directional way through two micro two-phase step motors, preferably Lavet-type motors. This module is especially, although not exclusively, conceived for smartwatches.

### Background of the invention

The watch industry has been quick and deeply changing during last years with the birth and evolution of the smartwatches. Among the wide range of smartwatches, those called hybrid watches share the typical functions of a smartwatch with a classic look, similar to that of the traditional analogue watches with hands.

The electronic components and the sensors commonly used by smartwatches take up a lot of space inside the case and therefore traditional constructions are no longer possible, while the motors have to be considered as another component integrated with the rest of electronic components. In this way independent modules integrating the motors and the train wheel to drive the hands have proved to be the best solution.

Many examples of this kind of modules can be found in the state of the art. For instance, US patent document US2003165086 discloses a compact colour-changing LCD watch which includes a configuration of the internal components of the timepiece resulting in a significant reduction in its thickness, thereby enhancing the comfort of the individual wearing the timepiece. The configuration comprises positioning two small-sized batteries in the same spatial plane as the PCB and analogue watch movement instead of the conventional stacked assembly arrangement whereby a larger battery is placed directly behind the PCB. The configuration is achieved by utilizing a single micro-control unit (MCU) to drive both a core analogue movement and a colour-changing LCD display.

Another example is found on document EP1211578, which discloses a watch assembly comprising a stack of modules forming an electronic or electro-mechanical device. The assembly comprises a number of intermediate tubular elements, called stage tubes mounted on the fixing tenons to compensate for different thicknesses of different components. Each state tube has first and second reference surfaces separated by a distance that is greater than the thickness of a first element for which it is to compensate, and against which an assembly is supported and a zone between the first and second reference surfaces, that ensures the first element is held against the stack of modules.

Document US5222051 also discloses an analogic display module for a watch movement which comprises a dial provided with a time graduation and hands to display the time. It comprises a display for the rhythm of the tides presenting six juxtaposed zones of different thicknesses cooperating with a hand the axis of which is located on the line separating the two middle zones and making one revolution in a time corresponding approximately to the time interval separating two successive high tides.

PCT application WO2019034958, held by this applicant, concerns an electromechanical timepiece module comprising a main plate in turn comprising an actuator module driving a mobile part by means of a gear train, the mobile part intended for the display of a time or non-time function. The main plate further comprises a wireless communication module configured for transmitting and/or receiving a wireless signal; and a control unit configured for controlling the actuator module depending on a received wireless signal. The mobile part and the gearing are made of an electrically conductive material and are in electrical contact with each other but electrically isolated from the remainder of the timepiece module. Finally, the mobile part is electrically connected to the communication module so as to act as an antenna for the transmission and/or reception of the wireless signal and to transmit the wireless signal between the mobile part and the wireless communication module. Document US6826126 discloses a stacked assembly of a plurality of modules and a timepiece including such an assembly forming a movement. The modules are mounted via assembly orifices on a plurality of mounting pins and assembled by compression between first and second planes. In order to absorb variations in thickness in a first element of the assembly, the latter includes a plurality of tube-shaped intermediate elements, called stepped tubes, mounted respectively on the mounting pins, each stepped tube being inserted in an assembly orifice of the first element.

Document EP3330811 discloses a hybrid mechanical watch comprising a mechanical watch movement comprising a plate and a bridge configured to hold in between of them mechanical parts of the mechanical watch movement, a plurality of electronic components comprising one or more from the list comprising a printed circuit board, a Lavet micro-motor, a rechargeable battery, and a microphone. The plurality of electronic components is part of the mechanical watch movement and is held in the mechanical watch movement between the plate and the bridge.

Finally, document WO2019043643 discloses a micromotor for a timepiece. The micromotor comprises a base plate configured to support components of the timepiece. A stator assembly comprises a stator mounted on a base plate of the timepiece, wherein, a cavity is defined in the stator. The stator assembly includes a first coil mounted on one side of the stator, and a second coil mounted on other side of the stator, wherein, profile of the first coil and the second coil are similar. A rotor is disposed in the cavity, and configured to generate bi- directional movement based on a flux generated by the first coil and the second coil, and a wheel assembly coupled to the rotor, is adapted to drive at least one movement of the timepiece.

In view of the state of the art, the modules existing today have the main drawbacks of having generally large dimensions as well as being complex and expensive. It is therefore desirable to develop a module capable of integrating in a single body a number of timepieces' functions, thus allowing a reduction of both the manufacturing costs and the size and also providing a better control of thickness' tolerance.

### Description of the invention

The object of the invention is an analogue display module for watches which drives at least one hand in an independent and bi-directional way through at least one corresponding two-phase step motor, preferably a Lavet-type motor. The module is connectable with at least one printed circuit board (PCB) of the smartwatch.

The object of the invention is achieved by a watch module as defined in annexed independent claim 1. Preferred embodiments are defined in the dependent claims.

The module comprises a three-dimensional connector which assembles together a number of typical functional elements of a watch, thus allowing a reduction of the manufacturing costs and the space, as well as a better control of the thickness' tolerance.

This connector, preferably made through plastic overmoulding of a metal strip, comprises a plate that integrates following elements and purposes:
- a soldering area for coils, preferably consisting of a metal surface;
- guiding pillars for a coil core, a stator and a main-plate; the tip of the pillars being fused to form a weld bead in order to hold together those components;
- a contact zone for an electrical connection of the coils with a command circuit;
- test points for the control of the motor performance; and
- a centring stud and fixation point to screw the motor on the command circuit, also ensuring a correct electrical contact between both elements.

In an alternative embodiment, the module further comprises a contact spring which allows and additional use of the hands as antenna for wireless communication. It's therefore possible to add a contact between the PCB and the gears to use the hands as antenna, therefore avoiding restrictions on the dial or case material as the antenna is just below the covering glass.

Among the many advantages of this construction with respect to the state of the art, it is to remark that while the wires of the coils are typically soldered on an additional PCB in turn glued or mechanically fixed on the coil core on it, the module as described above avoids the need of said additional PCB, because the coils and the wires are directly assembled on the connector. This feature allows a better control of the thickness by suppressing the glue and the PCB. To solder the copper wires of the coils on the connector, the metal surface has to be plated with nickel or gold. This platting is made on the raw surface before the plastic overmoulding.

In traditional construction of analogue display modules, additional metal pillars are fitted on the main plate, the other components of the motor being later assembled on those pillars and fixed with screws. In this case, on which the pillars are integrated in the connector, the components of the motor are assembled on it and later soldered on the main plate. Avoiding the need of fitted pillars and screws means lower manufacturing costs and lower weights.

Analogue display modules of the state of the art do not comprise test points for the control of the motor performance, and these tests are made through the existing tracks of the additional PCB, which can be difficult due to the lack of space and the short distance between the contacts. In the disclosed analogue display module, free spaces located on the opposite side of the pillars are used to create test points easily accessible with standard test pins.

Finally, the centring stud and fixation point allows the connection of up to four wires with a single screw. The centring stud is usually a protrusion located in the centre of the motor. The outer diameter positions the motor on the main PCB, for its later fixation with a screw using the inner diameter of the stud. Traditionally the additional pillar is used for this.

The analogue display module further allows a driving method for motors which involves the two coils at the same time to secure the step and reduce the power consumption. The new high-speed drive reaches a frequency of up to 320Hz instead of the usual 60Hz.

### Description of the drawings

As a complement to the description provided herein, and for the purpose of helping to make the features of the invention more readily understandable, in accordance with a preferred practical exemplary embodiment thereof, said description is accompanied by a set of drawings which, by way of illustration and not limitation, represent the following:
Figure 1 shows a back-perspective view of the display module coupled with the hands and the screen of a smartwatch.
Figure 2 shows a front-perspective view of a first embodiment of the analogue display module for watches.
Figure 3 shows a back-perspective view of the display module.
Figure 4 shows a semi-exploded view of the module.
Figure 5 shows a complete exploded view of the module.
Figure 6 shows a front-perspective detailed view of the three-dimensional connector.
Figure 7 shows a back-perspective detailed view of the three-dimensional connector.
Figure 8 shows a perspective view of the display module coupling with a PCB.
Figure 9 shows a front-perspective view of a second embodiment of the analogue display module.
Figure 10 shows a front-perspective view of a third embodiment of the analogue display module.

### Preferred embodiment of the invention

A detailed explanation of a preferred embodiment of the object of the present invention is provided below with the aid of the aforementioned figures.

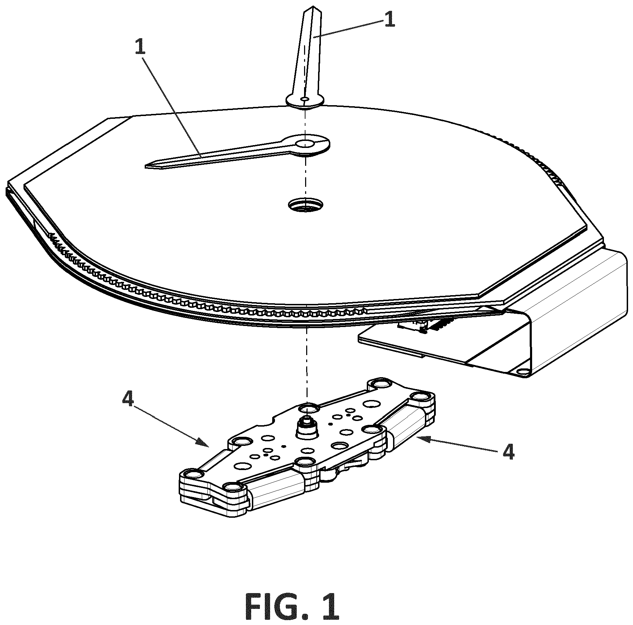

The analogue display module for watches is conceived to be coupled in the mechanism of a watch, as shown in figure 1, in order to drive at least one hand (1) in an independent and bi-directional way through a correspondent micro motor, namely a Lavet-type stepping motor.

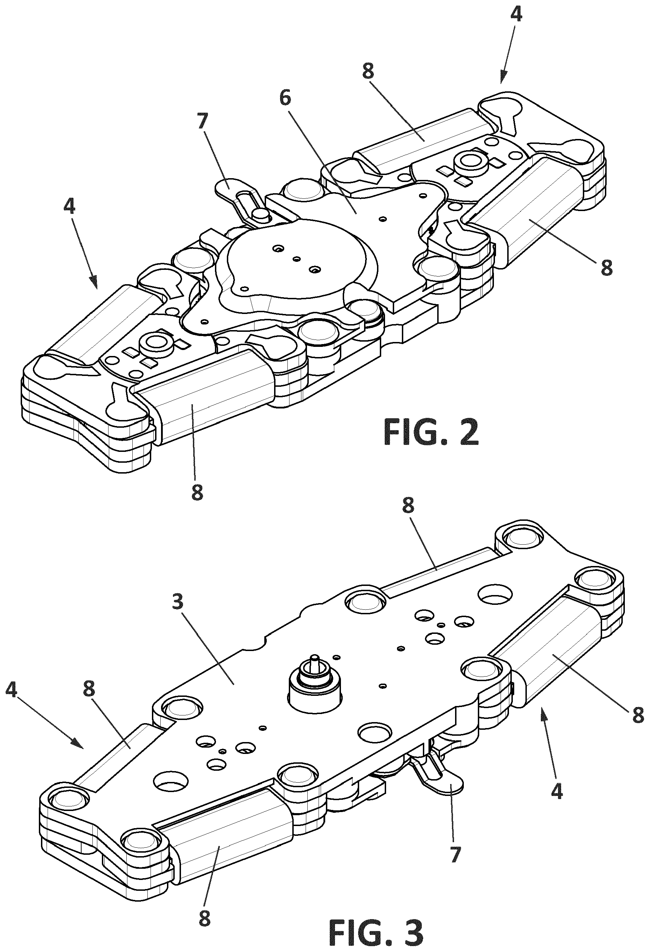

In this first embodiment, as shown in figures 2-5, the analogue display module for watches is used to drive three separate hands (1), wherein two of the hands (1) are linked together, in an independent and bi-directional way through two micro two-phase step motors. Respective longitudinal symmetry axes of the two motors are collinear to each other, on which is known as a straight disposition. The module is connectable with a printed circuit board (2) of the smartwatch.

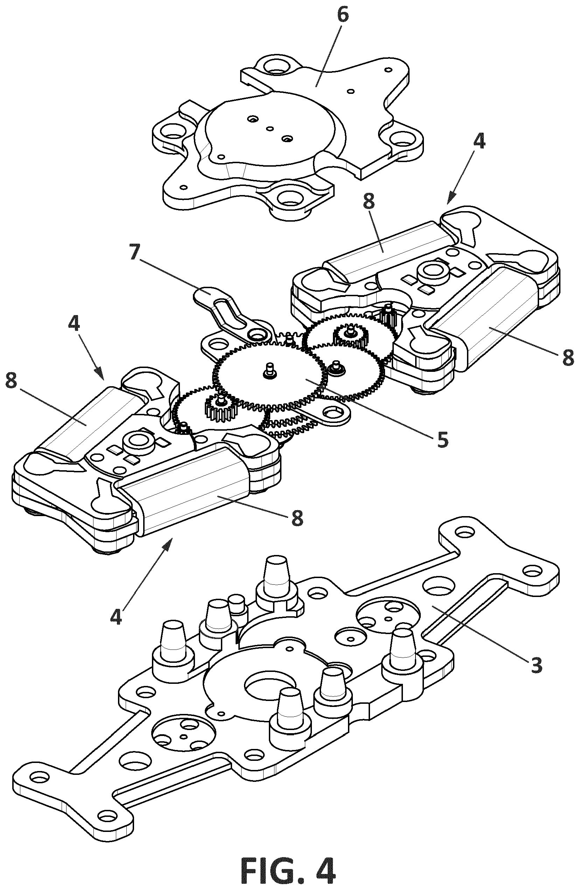

The module comprises a main plate (3) on which at least an actuator element (4), and a gear assembly (5) are attached. As shown on figure 4, this embodiment has two actuator elements (4). It further comprises a cover (6) to recover and protect the gear assembly (5), and a contact spring (7) which allows the use of the hands (1) as an antenna for wireless communication.

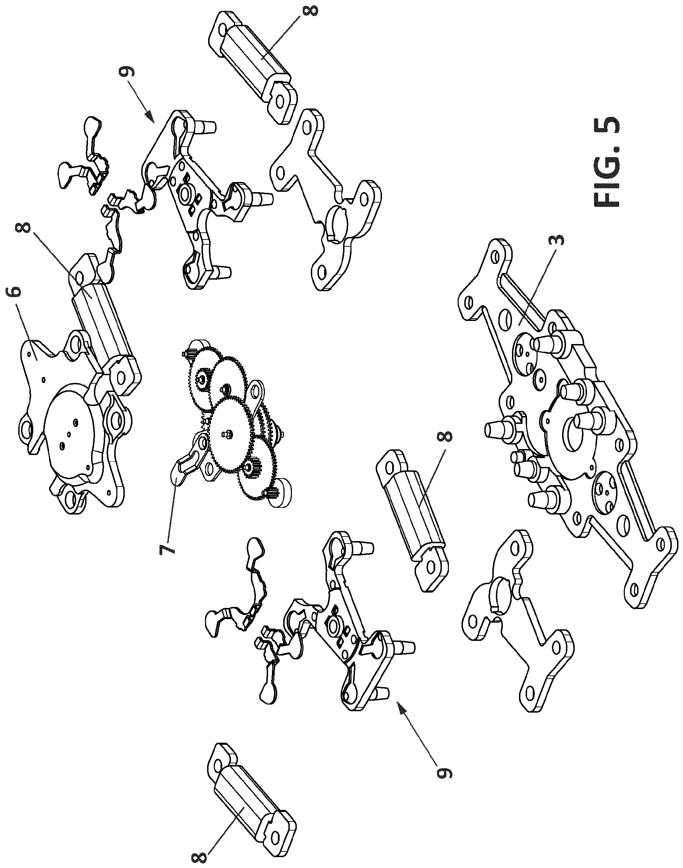

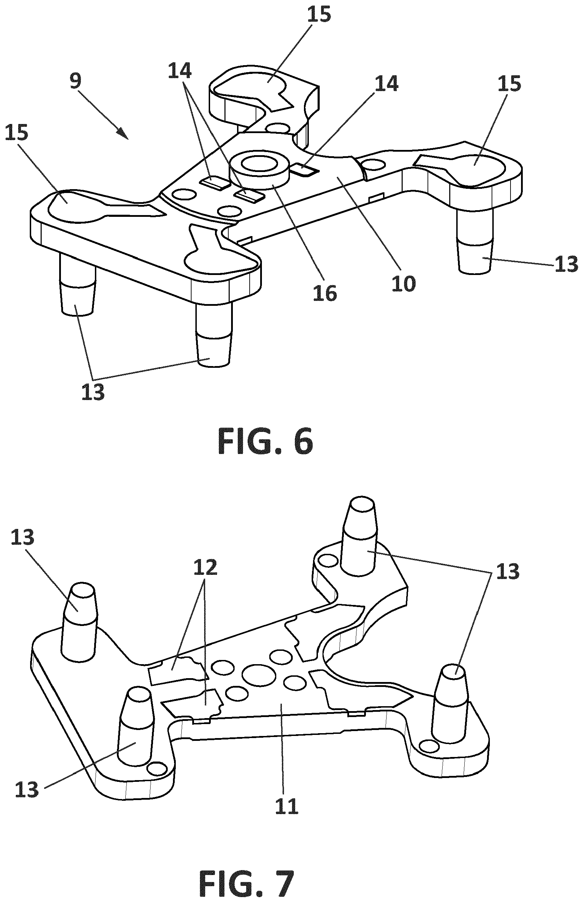

As it can be seen on the exploded view of figure 5, the actuator element (4) comprises at least one micro motor, at least two coils (8) connected with the motor and a three-dimensional connector (9). This connector (9), shown on figures 5 and 6, in turn comprises a plate with a front side (10) and a rear side (11).

The three-dimensional connector (9) comprises:
- soldering areas (12) for the attachment of the coils (8) by soldering,
- guiding pillars (13) for the attachment of a coil core, a stator and the main-plate (3);
- a contact zone (14) for an electrical connection of the coils (8) with a command circuit;
- test points (15) for control of the motor performance; and
- a centring stud and fixation point (16) to screw the motor with the command circuit, also ensuring a correct electrical contact between both elements.

The plate of the connector (9), which in this embodiment is made through plastic overmoulding of a metal strip, comprises a central area of an essentially polygonal shape, with four corner areas on which the guiding pillars (13) are located. The tip of each of the pillars (13) is fused to form a weld bead in order to hold together the coil core, the stator and the main plate (3).

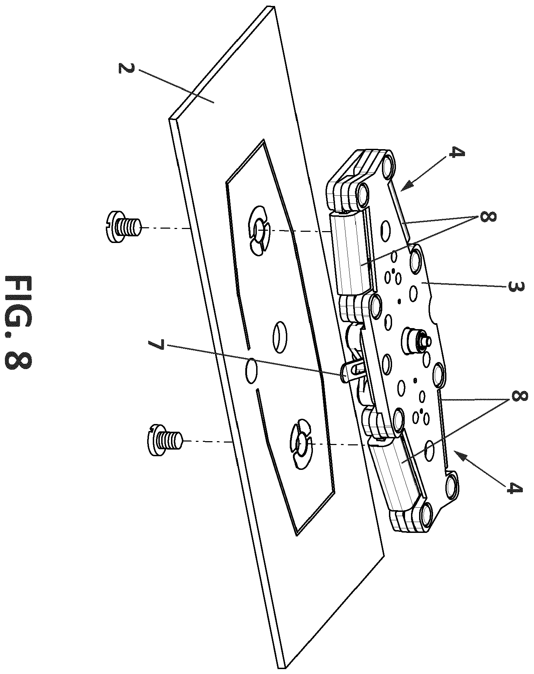

As it can be seen on figure 8, during the manufacture of the watch the display module is coupled on a printed circuit board (2) just through one screw per motor, which leads to a faster and cheaper assembly.

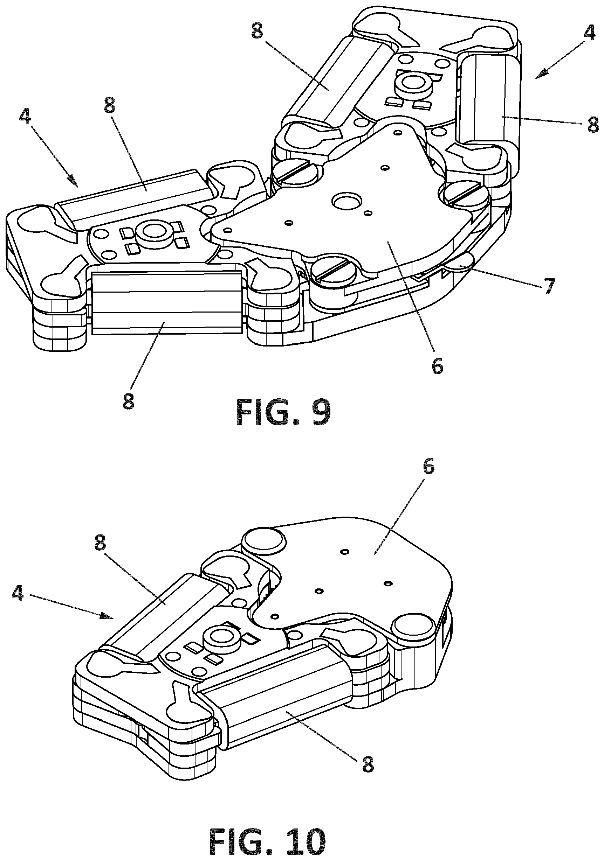

A first alternative embodiment of the display module is seen on figure 9. This module also comprises two actuator elements (4), but in this case the respective longitudinal symmetry axes of the two motors are unaligned thus forming an angle on which is known as a V disposition.

On a second alternative embodiment, shown in figure 10, the module comprises one actuator element (4) to drive one hand (1).

Further alternative embodiments, not shown on attached figures, comprise analogue display modules with two actuator elements (4) to drive two separate hands (1).

## Claims

1. Analogue display module for watches couplable with the mechanism of a watch to drive at least one hand (1) in an independent and bi-directional way, wherein the module comprises at least a main plate (3) on which at least an actuator element (4), and a gear assembly (5) are attached, and wherein the actuator element (4) in turn comprises at least one micro motor and coils (8) connected with the motor and the gear assembly (5), wherein the actuator element further comprises a three-dimensional connector (9) comprising:
- soldering areas (12) for attachment of the coils (8) by soldering;
- guiding pillars (13) for the attachment of a coil core, a stator, and the main plate (3), wherein a tip of each of the pillars (13) is fused to form a weld bead in order to hold together a coil core, a stator, and the main plate (3);
- a contact zone (14) for an electrical connection of the coils (8) with a command circuit;
- test points (15) for control of the motor performance; and
- a centring stud and fixation point (16) to screw the motor with the command circuit, and to ensure an electrical contact between both elements.

2. The analogue display module of claim 1 wherein the module comprises a contact spring (7) connectable with the hand (1) for wireless communication.

3. Analogue display module according to any preceding claim wherein the three-dimensional connector (9) is made of overmoulded metal.

4. Analogue display module according to any preceding claim wherein the micro motor is a Lavet-type stepping motor.

5. Watch comprising the analogue display module according to any of the preceding claims.

6. Smartwatch comprising the analogue display module according to claims 1-4.

## Patentansprüche

1. Analoganzeigemodul für Uhren, das mit dem Mechanismus einer Uhr gekoppelt werden kann, um mindestens einen Zeiger (1) unabhängig und bidirektional anzutreiben, wobei das Modul mindestens eine Hauptplatte (3) umfasst, auf der mindestens ein Aktuatorelement (4) und eine Getriebeanordnung (5) befestigt sind, und wobei das Aktuatorelement (4) seinerseits mindestens einen Mikromotor und Spulen (8), die mit dem Motor und der Getriebeanordnung (5) verbunden sind, umfasst, wobei das Aktuatorelement ferner einen dreidimensionalen Steckverbinder (9) umfasst, umfassend:
- Lötbereiche (12) für die Befestigung der Spulen (8) durch Löten;
- Führungssäulen (13) für die Befestigung eines Spulenkerns, eines Stators und der Hauptplatte (3), wobei eine Spitze von jeder der Säulen (13) zu einer Schweißraupe verschmolzen ist, um einen Spulenkern, einen Stator und die Hauptplatte (3) zusammenzuhalten;
- einen Kontaktbereich (14) für eine elektrische Verbindung der Spulen (8) mit einer Steuerschaltung;
- Messstellen (15) für die Kontrolle der Motorleistung; und
- einen Zentrierbolzen und Befestigungspunkt (16), um den Motor mit der Steuerschaltung zu verschrauben und einen elektrischen Kontakt zwischen beiden Elementen sicherzustellen.

2. Analoganzeigemodul nach Anspruch 1, wobei das Modul eine Kontaktfeder (7) umfasst, die für die drahtlose Kommunikation mit dem Zeiger (1) verbunden werden kann.

3. Analoganzeigemodul nach einem der vorhergehenden Ansprüche, wobei der dreidimensionale Steckverbinder (9) aus überspritztem Metall besteht.

4. Analoganzeigemodul nach einem der vorhergehenden Ansprüche, wobei der Mikromotor ein Lavet-Schrittmotor ist.

5. Uhr, umfassend das Analoganzeigemodul nach einem der vorhergehenden Ansprüche.

6. Smartwatch, umfassend das Analoganzeigemodul nach den Ansprüchen 1 bis 4.

## Revendications

1. Module d'affichage analogique pour montres pouvant être accouplé au mécanisme d'une montre pour entraîner au moins une aiguille (1) de manière indépendante et bidirectionnelle, dans lequel le module comprend au moins une plaque principale (3) sur laquelle sont fixés au moins un élément actionneur (4) et un ensemble d'engrenages (5), et dans lequel l'élément actionneur (4) comprend à son tour au moins un micromoteur et des bobines (8) connectées au moteur et à l'ensemble d'engrenages (5), dans lequel l'élément actionneur comprend en outre un connecteur tridimensionnel (9) comprenant :
- des zones de soudure (12) pour la fixation des bobines (8) par soudure ;
- des piliers de guidage (13) pour la fixation d'un noyau de bobine, d'un stator et de la plaque principale (3), dans lequel une pointe de chacun des piliers (13) est fondue pour former un cordon de soudure afin de maintenir ensemble un noyau de bobine, un stator et la plaque principale (3) ;
- une zone de contact (14) pour une connexion électrique des bobines (8) avec un circuit de commande ;
- des points de test (15) pour le contrôle des performances du moteur ; et
- un goujon de centrage et point d'attache (16) pour visser le moteur avec le circuit de commande, et pour assurer un contact électrique entre les deux éléments.

2. Module d'affichage analogique selon la revendication 1, dans lequel le module comprend un ressort de contact (7) pouvant être connecté à l'aiguille (1) pour une communication sans fil.

3. Module d'affichage analogique selon l'une quelconque des revendications précédentes, dans lequel le connecteur tridimensionnel (9) est réalisé en métal surmoulé.

4. Module d'affichage analogique selon l'une quelconque des revendications précédentes, dans lequel le micromoteur est un moteur pas-à-pas de type Lavet.

5. Montre comprenant le module d'affichage analogique selon l'une quelconque des revendications précédentes.

6. Montre intelligente comprenant le module d'affichage analogique selon les revendications 1 à 4.
